# EUROPEAN PATENT APPLICATION

(11) **EP 4 530 058 A1**
(43) Date of publication of application: **02.04.2025**
(21) Application number: 24202058.4
(22) Date of filing: 23.09.2024
(51) Int. Cl.: B32B 1/08, B32B 5/02, B32B 5/06, B32B 5/26, B32B 7/09, B32B 27/08, B32B 27/12, B32B 27/40, F16L 11/02

(54) **AIR HOSE**

(30) Priority: 26.09.2023 US 202363540476 P; 19.09.2024 US 202418890140
(71) Applicant: Illinois Tool Works Inc., Glenview IL 60025 (US)
(72) Inventor: SPALDING, Joshua, Glenview, 60025 (US); NIELSEN, Bo Vork, Glenview, 60025 (US)
(74) Representative: HGF

(57) **Abstract**

An air hose and a method for making an air hose that includes a woven polyamide fabric having an edge, a weldable surface coating extending along the edge, and a welded seam extending along the edge to form a tube.

## Description

### CROSS REFERENCE TO RELATED APPLICATION

This application claims the benefit of U.S. Provisional Application, Serial No. 63/540,476, filed on 26 September 2023. The co-pending provisional application is hereby incorporated by reference herein in its entirety and is made a part hereof, including but not limited to those portions which specifically appear hereinafter.

### TECHNICAL FIELD

The invention relates to an air hose. In particular, the invention relates to an air hose for delivering air, for example pre-conditioned air, to an aircraft.

### BACKGROUND

Pre-conditioned air systems are used to bring cooled or heated air into a parked aircraft. Air is supplied from a pre-conditioned air unit to cabins of the aircraft via air hoses, which are referred to as pre-conditioned air hoses, when the aircraft is grounded and an auxiliary power unit is not operational. Such air hoses are often around 18 metres in length, and the pre-conditioned air unit is typically mounted to a passenger boarding bridge at an airport.

One type of pre-conditioned air hose is a flat air hose that can be flattened when deflated and rolled for storage. This is advantageous as a reel of flattened and rolled hose is relatively small, as compared to other airport equipment. The reel is compact and can be stored easily on the bridge, which is busy with other equipment.

### BRIEF DESCRIPTION OF THE SEVERAL VIEWS OF THE DRAWINGS

Embodiments of the invention are now described, by way of example only, hereinafter with reference to the accompanying drawings.
FIG. 1 illustrates a first example air hose.
FIG. 2 illustrates a second example air hose.
FIG. 3 illustrates an example sheet for forming the air hose of FIG. 1 or FIG. 2.
FIG. 4 illustrates a cross-section of an example multilayer material of the sheet of FIG. 3.
FIG. 5 illustrates a wound air hose according to one embodiment.
FIG. 6 illustrates a detail of an end of the wound air hose shown in FIG. 5.
FIG. 7 illustrates a side cross-section of an air hose according to one embodiment.
FIG. 8 illustrates a detail of an edge of the air hose shown in FIG. 7.

### DETAILED DESCRIPTION

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words `inner', `inwardly', `outer' and 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled' and 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second" and "third" etc. merely indicate that different instances of like objects are being referred to and are not intended to imply that the objects so described must be in a given sequence, either temporally, spatially, in ranking or in any other manner.

Like reference numerals are used to depict like features throughout.

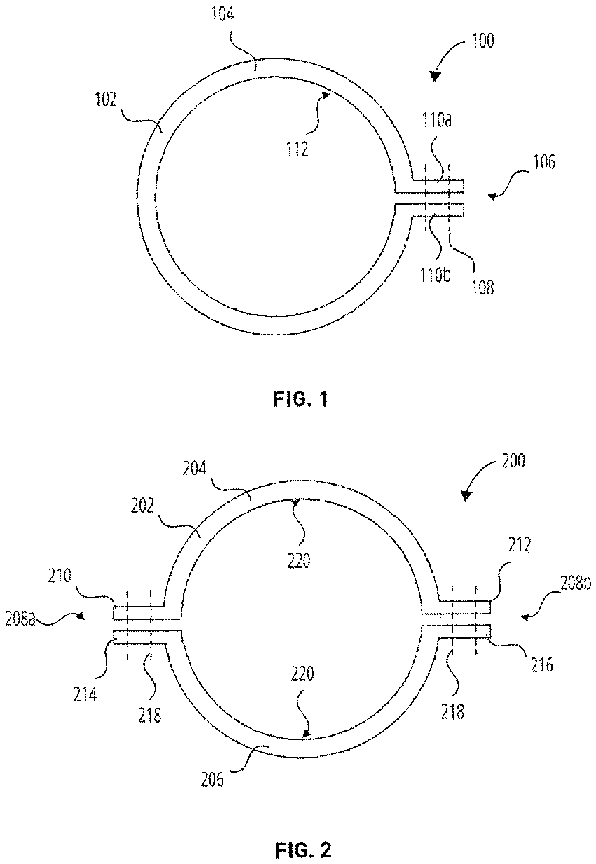

FIG. 1 shows a first example air hose 100. The air hose 100 may be a preconditioned air hose (PCA air hose). In this example the air hose 100 formed of a single sheet 104 that is formed into a tube 102. The sheet 104 comprises a woven polyamide fabric and has a weldable surface coating on an inner surface 112 and extending along edge 110a and edge 110b. In examples, the weldable surface coating is provided across the entire inner surface 112 of the sheet 104, or only along the edge 110a and edge 110b.

As shown, the tube 102 is formed by welding the edge 110a and the edge 110b to each other at a welded seam 106. In particular, the inner surfaces 112 of the edge 110a and the edge 110b are welded to each other to join the weldable surface coatings and form a welded seam 106.

The weldable surface coating comprises a thermoplastic, for example a thermoplastic polyurethane or a polyester based urethane coating. Accordingly, the welded seam 106 can be formed by pressing together and heating the edge 110a and the edge 110b so that the inner surfaces 112 are welded together. Heated rollers may be used to press and heat the edge 110a and the edge 110b. Advantageously, the welded seam 106 creates a seal and is substantially airtight, for example airtight.

As shown, preferably stitches 108 are provided through the welded seam 106. The stitches 108 strengthen the welded seam 106 and improve the durability of the air hose 100. Advantageously, by providing the stitches 108 within the welded seam 106 the stitches 108 do not reduce the airtightness of the tube 102. In examples, the stitches 108 form a continuous line of stitching along the length of the air hose 100, and in other examples the stitches 108 may be in spaced groups. There may be more than one line of stitches 108 through the welded seam 106, and the lines of stitches 108 may be straight or non-linear.

Ends of the air hose 100 may be provided with attachment features for joining a first end of the air hose 100 to an air source, for example a preconditioned air unit (PCA unit), and for joining a second end to an aircraft or to a connector for connecting to an aircraft. The attachment features may include hook-and-loop fasteners (e.g., Velcro), straps, attachment brackets, or similar.

FIG. 2 shows a second example air hose 200. The air hose 200 may be a preconditioned air hose (PCA air hose). In this example the air hose 200 has a first sheet 204 and a second sheet 206 formed into a tube 202. The first sheet 204 and the second sheet 206 both comprise a woven polyamide fabric with a weldable surface coating on an inner surface 220. The weldable surface coating extends along a first edge 210 and a second edge 212 of the first sheet 204, and along a first edge 214 and a second edge 216 of the second sheet 206. In examples, the weldable surface coating is provided across the entire inner surfaces 220 of the first sheet 204 and the second sheet 206, or only along the first edge 210, second edge 212, first edge 214, and second edge 216.

As shown, the tube 202 is formed by joining the first edge 210 of the first sheet 204 to the first edge 214 of the second sheet 206 at a first welded seam 208a, and by joining the second edge 212 of the first sheet 204 to the second edge 216 of the second sheet 206 at a second welded seam 208b. In particular, the inner surfaces 220 of the first sheet 204 and the second sheet 206 are welded along their edges to join the weldable surface coatings and form the first welded seam 208a and the second welded seam 208b.

The weldable surface coating comprises a thermoplastic, for example a thermoplastic polyurethane or a polyester based urethane coating. Accordingly, the first welded seam 208a can be formed by pressing together and heating the first edge 210 of the first sheet 204 and the first edge 214 of the second sheet 206, and the second welded seam 208b can be formed by pressing together and heating the second edge 212 of the first sheet 204 and the second edge 216 of the second sheet 206. Heated rollers may be used to press and heat the edges. Advantageously, the first welded seam 208a and the second welded seam 208b are sealed and substantially airtight, for example airtight.

As shown, preferably stitches 218 are provided through the first welded seam 208a and the second welded seam 208b. The stitches 218 strengthen the first welded seam 208a and the second welded seam 208b and improve the durability of the air hose 200. Advantageously, by providing the stitches 218 within the first welded seam 208a and the second welded seam 208b the stitches 218 do not reduce the airtightness of the tube 202. In examples, the stitches 218 form a continuous line of stitching along the length of the air hose 200, and in other examples the stitches 218 may be in spaced groups. There may be more than one line of stitches 218 through the first welded seam 208a and second welded seam 208b, and the lines of stitches 218 may be straight or non-linear.

Ends of the air hose 200 may be provided with attachment features for joining a first end of the air hose 200 to an air source, for example a preconditioned air unit (PCA unit), and for joining a second end to an aircraft or to a connector for connecting to an aircraft. The attachment features may include hook-and-loop fasteners (e.g., VELCRO closures), straps, attachment brackets, or similar.

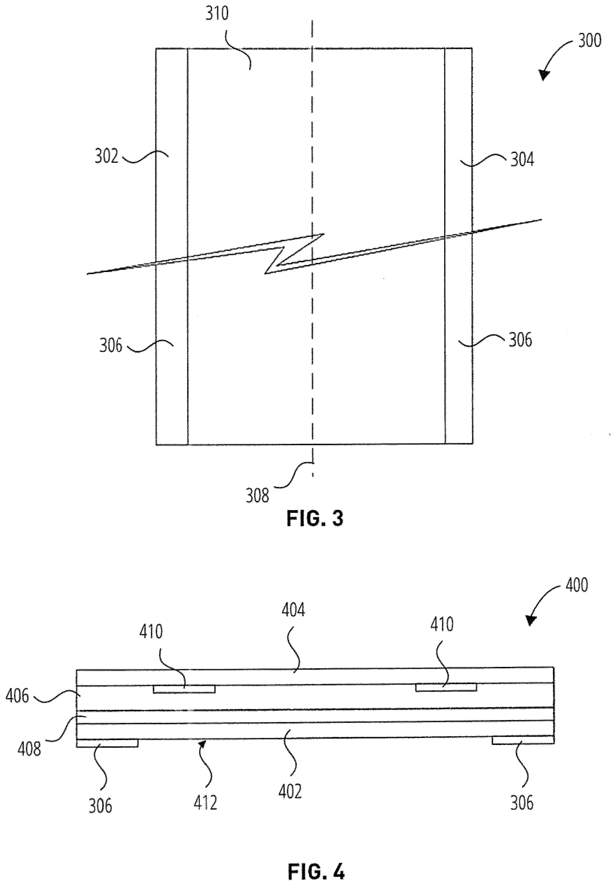

FIG. 3 shows a sheet 300 that may be used as the sheet 104 of the air hose 100 of FIG. 1, or as the first sheet 204 or second sheet 206 of the air hose 200 of FIG. 2. The sheet 300 is illustrated from an inner surface 310.

The sheet 300 comprises a woven polyamide fabric, for example Nylon. A suitable example material is Cordura (TM) marketed by Invista (TM).

The sheet 300 extends in a longitudinal direction 308 to a length corresponding to the length of the air hose. As shown, the sheet 300 includes a first edge 302 and a second edge 304. The first edge 302 and the second edge 304 are on opposite sides of the sheet 300. The first edge 302 and the second edge 304 are the edges extending in the longitudinal direction 308.

As shown, in this example a weldable surface coating 306 is provided on the first edge 302 and on the second edge 304. In some examples the weldable surface coating 306 extends over the entire inner surface 310, or may be limited to the first edge 302 and the second edge 304.

The weldable surface coating 306 comprises a thermoplastic, for example a thermoplastic polyurethane or a polyester based urethane coating.

To make the air hose 100 of FIG. 1 the first edge 302 can be folded over onto the second edge 304 so that their inner surfaces 310 are facing each other, and the first edge 302 and the second edge 304 can then be welded together and optionally stitched.

To make the air hose 200 of FIG. 2 a second sheet can be provided that has the same features as the illustrated sheet 300, and edges of the sheet 300 and the second sheet can be welded together as shown in FIG. 2.

FIG. 4 shows a cross section through a multilayer material 400 that may be used as the sheet 300 described with reference to FIG. 3. As shown, the multilayer material 400 includes an inner surface 412 and a weldable surface coating 306 is provided along the opposite edges of the multilayer material 400 as previously described.

The multilayer material 400 comprises an inner layer 402, an outer layer 404, and an insulation layer 406. The inner layer 402 comprises a woven polyamide fabric, for example Nylon. A suitable example material is Cordura (TM) marketed by Invista (TM). The inner layer 402 may have a Denier of about 400D. The weldable surface coating 306 is provided on the inner layer 402.

Preferably, the outer layer 404 also comprises a woven polyamide fabric, for example Nylon. A suitable example material is Cordura (TM) marketed by Invista (TM). The outer layer 404 may have a Denier of about 1000D, thereby providing suitable protection of the inner layer 402.

The insulation layer 406 preferably comprises a woven fabric, for example woven polyethylene, and includes a foil 408 facing the inner surface 412.

The inner layer 402, outer layer 404, and insulation layer 406 may be joined as a laminate material, or joined only in spaced locations. In some examples, the outer layer 404 and the insulation layer 406 may be attached by lines of stitches extending longitudinally along the air hose, and the inner layer 402 may only be joined to the insulation layer 406 at the welded seam(s). Such a construction ensures that the inner layer 402 maintains airtightness and is protected by the outer layer 404 and the insulation layer 406.

In some examples, as shown, one or more elastic strips 410 may be provided within the multilayer material 400. In examples, the elastic strips 410 extend longitudinally along the multilayer material 400 (in the longitudinal direction 308 as shown in FIG. 3) and help to prevent kinking of the air hose during use. The elastic strips 410 may cause the air hose to collapse in a radial direction when not in use (not extended or inflated). The elastic strips 410 are preferably joined (e.g., adhered, welded, and/or stitched) to the outer layer 404, particularly an inner surface of the outer layer 404.

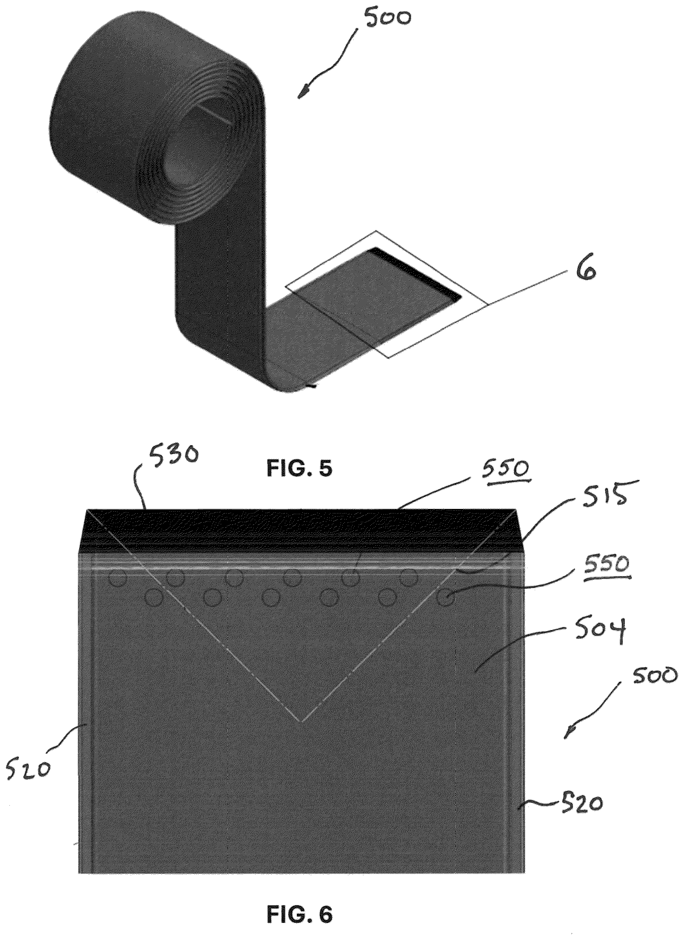

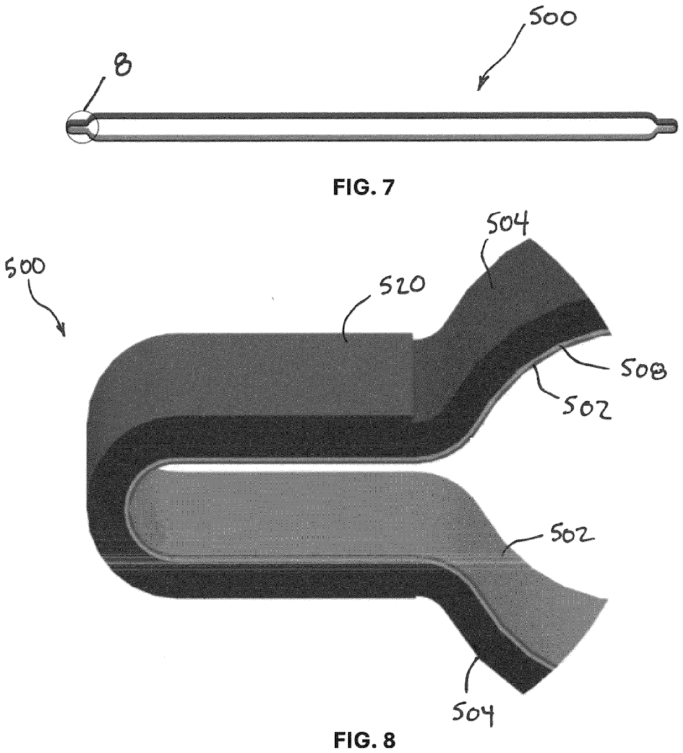

FIG. 5 shows a third example air hose 500. The air hose 500 may be a preconditioned air hose (PCA air hose). In this example the air hose 500 may be formed as in air hose 100 or air hose 200, using sheet 300, and/or using multilayer material 400, each as described above. FIG. 5 shows a rolled air hose having detail 6, shown in FIG. 6. FIG. 7 shows a cross-section of air hose 500 and FIG. 8 shows a detail of that cross-section.

Similar to the embodiments described above, air hose 500 may include an inner layer 502 and an outer layer 504 together with an intermediate insulation layer 508, such as foil. An outer fabric 520 may be joined along each edge of the air hose 500 to form edges, such as with the stitching described above.

FIG. 6 shows a detail of an end of air hose 500. In this detail, it may be appreciated that one or more vent apertures 550 are formed in one or both ends of air hose 500. Vent apertures 550 are preferably formed in the outer layer 504 and are preferably arranged close to but not directly along the end of air hose 500. In such a manner, the air hose 500 may be rolled up as shown in FIG. 5 and any access trapped air can escape either through an end air hose 500 or through the suitable vent apertures 550. Alternatively, or in addition, the vent apertures 550 may be replaced with a breathable outer layer 504 and/or small apertures throughout an entire length of air hose 500.

As shown in FIG. 6, each end of air hose 500 may include sewing lines 515 to close off each end of air hose 500. Vent apertures 550 should not interfere with such sewing lines 515 and are preferably arranged at a distance from each sewing line 515. In addition, and as described above, an attachment feature 530 such as a VELCRO closure may be formed at one or both ends of air hose.

It is understood that the vent apertures 550 described in connection with air hose 500 may be alternatively used in the embodiments of the air hoses 100, 200, sheet 300 and/or multilayer material 400 described above.

It will be appreciated by persons skilled in the art that the above detailed examples have been described by way of example only and not in any limitative sense, and that various alterations and modifications are possible without departing from the scope of the invention as defined by the appended claims. Various modifications to the detailed examples described above are possible.

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

## Claims

1. An air hose comprising a woven polyamide fabric having an edge, a weldable surface coating extending along the edge, and a welded seam extending along the edge to form a tube.

2. The air hose of claim 1, comprising a multilayer material having an inner layer and an outer layer, wherein the inner layer comprises the woven polyamide fabric and the weldable surface coating, and wherein the inner layer is welded along the edge to form the welded seam.

3. The air hose of claim 2, wherein the outer layer comprises a woven polyamide fabric.

4. The air hose of Claim 2 further comprising one or more vent apertures arranged in the outer layer toward at least one end of the air hose.

5. The air hose of claim 2, wherein the multilayer material further comprises an insulation layer between the inner layer and the outer layer.

6. The air hose of claim 5, wherein the insulation layer comprises a foil.

7. The air hose of claim 1, wherein the weldable surface coating comprises a thermoplastic, for example a thermoplastic polyurethane, or a polyester based urethane coating.

8. The air hose of claim 1, wherein the woven polyamide fabric comprises a first edge and a second edge, each of the first edge and the second edge comprising the weldable surface coating, and wherein the first edge is welded to the second edge to form the welded seam.

9. The air hose of claim 1, comprising a first sheet and a second sheet, each of the first sheet and the second sheet comprising the woven polyamide fabric, wherein each of the first sheet and the second sheet comprise a weldable surface coating extending along a first edge and a second edge, wherein the first edge of the first sheet is welded to the first edge of the second sheet to form a first welded seam, and wherein the second edge of the first sheet is welded to the second edge of the second sheet to form a second welded seam.

10. The air hose of claim 1, wherein the welded seam further comprises stitches, optionally wherein the stitches extend substantially continuously along the welded seam.

11. The air hose of claim 1, further comprising one or more vent apertures arranged along at least one end of the air hose.

12. A method of manufacturing an air hose, the method comprising:
providing a woven polyamide fabric having an edge and a weldable surface coating extending along the edge, and
forming a tube by welding the edge to form a welded seam extending along the edge.

13. The method of claim 12, comprising:
providing a first sheet and a second sheet, each of the first sheet and the second sheet comprising the woven polyamide fabric, a first edge, a second edge, and a weldable surface coating extending along the first edge and the second edge,
welding the first edge of the first sheet to the first edge of the second sheet to form a first welded seam, and
welding the second edge of the first sheet to the second edge of the second sheet to form a second welded seam.

14. The method of claim 12, further comprising stitching through the welded seam.

15. The method of claim 12, further comprising providing one or more vent apertures along at least one end of the air hose.
